# EUROPEAN PATENT APPLICATION

(11) **EP 2 781 277 A1**
(43) Date of publication of application: **24.09.2014**
(21) Application number: 13159999.5
(22) Date of filing: 19.03.2013
(51) Int. Cl.: B21D 39/02, B62D 27/02, F16B 11/00, F16B 5/00, C09J 163/00

(54) **Panel assembly and method for making the same**

(71) Applicant: 3M Innovative Properties Company, Saint Paul, Minnesota 55133-3427 (US)
(72) Inventor: Koch, Bernhard, D-41464 Neuss (DE); Yavuz, Nurettin, D-40223 Düsselddorf (DE)
(74) Representative: Bergen, Katja

(57) **Abstract**

The invention provides a panel assembly comprising:
- an inner panel 20 and an outer panel 10, wherein at least the outer panel is a metal panel, the panel assembly is formed by bending a flange portion 12 of the outer panel over a flange portion 22 of the inner panel (hem structure), and
- a structural adhesive 30, which is between the flange portions of the inner and the outer panel and adheres the inner and the outer panel together,
- wherein the geometry of the hem structure is adjusted to ensure that during further processing of the panel assembly through typical automotive production processes no liquid enters between facing surfaces of the panels and the adhesive.

## Description

The present invention relates to an assembly of two panels that are adhered to each other, wherein at least one panel is a metal panel, as well as to a method of making the panel assembly.

Joints in vehicles, e.g. metal joints, may be formed through the use of an adhesive. For example an adhesive may be used to bond a metal panel, for example a roof panel to a support structure of chassis of the vehicle or an outer door panel to an inner door panel. Further, an adhesive may be used to join two panels of the vehicle closure panel. Vehicle closure panels typically comprise an assembly of an outer and an inner metal panel whereby a hem structure is formed by folding an edge of an outer panel over an edge of the inner panel. Typically, the outer door panel is a metal panel and an adhesive is provided there between to bond the panels together. Further, a sealant typically needs to be applied to the joint of the metal panels to provide for sufficient corrosion resistance.

For example, US 6,00,118 discloses the use of a flowable sealant bead between the facing surfaces of the two panels, and a thin film of uncured paint like resin between a flange of the outer panel and the exposed surface of the inner panel. US 6,368,008 discloses the use of an adhesive for securing two metal panels together. The edge of the joint is sealed by a metal coating. WO 2009/071 269 discloses an expandable epoxy paste adhesive as a sealant for a hem flange. A further hemmed structure is disclosed in US 6,528,176.

EP 2 529 856 A1 discloses an adhesive sheet for bonding metal parts and panels. This sheet allows for bonding of the metal parts and panels to an adequate level while also providing good sealing properties on the joint thereby providing corrosion resistance.

There is still a need to provide a panel assembly, including at least one metal panel, using an adhesive for bonding the two panels, that is optimized in quality and optical appearance of the adhesive, especially after heating the assembly in order to activate the adhesive.

The above mentioned need may be solved by a panel assembly comprising:
- an inner panel and an outer panel, wherein at least the outer panel is a metal panel, the panel assembly is formed by bending a flange portion of the outer panel over a flange portion of the inner panel (hem structure), and
- a structural adhesive, which is between the flange portions of the inner and the outer panel and adheres the inner and the outer panel together, wherein
- the geometry of the hem structure is adjusted to ensure that before activating the adhesive and during further processing of the panel assembly no liquid enters between facing surfaces of the panels and the adhesive.

The inner and the outer panel may be made out of the same material or they may be made out of different materials (hybrid structure). They may for example be panels of a vehicle or any other automotive product.

The adhesive that is used in the present invention may be any adhesive that is suitable for bonding panels together and that is able to withstand typical automotive production processes, such as for example degreasing, flushing, phosphatising and/or e-coating. Preferable the adhesive used in the present invention is an adhesive that is able to withstand these processes even before being activated.

According to the present invention the adhesive may be a structural adhesive film comprising a thermosettable composition, which comprises:
a) an epoxy compound having an average epoxy equivalent weight of less than 250g/equivalent;
b) a thermoplastic resin having a softening point comprised between 60°C and 140°C;
c) an epoxy curing agent; and
d) optionally, a toughening agent;
wherein the weight ratio of the epoxy compound and the thermoplastic resin, and optionally the amount of the toughening agent are selected such as to provide the structural adhesive film with an elongation at break of at least 60%, when measured according to tensile test DIN EN ISO 527.

The term "film" used throughout the present description relates to two-dimensional articles which are usually referred to as strips, foils, bands, sheets, sheeting or the like. The softening point of the thermoplastic resin is typically defined as its Tg value (Glass Transition Temperature), as measured e.g. by Differential Scanning Calorimetry (DSC) or Thermo-Mechanical Analysis (TMA).

In the context of the present invention, it has been surprisingly discovered that uncured structural adhesive films provided with an elongation at break of at least 60%, when measured according to tensile test DIN EN ISO 527, are particularly suitable for automated handling and application (in particular by fast robotic equipments), in particular when used for bonding metal parts, more in particular for hem flange bonding of metal parts. Advantageously, the structural adhesive films according to the invention allows high-speed robotic application.

In a preferred aspect, the present invention relates to a structural adhesive film comprising a thermosettable composition, wherein the thermosettable composition comprises:
a) from 30 to 60 wt%, preferably from 40 to 60 wt%, more preferably from 50 to 60 wt%, of an epoxy compound having an average epoxy equivalent weight of less than 250g/equivalent;
b) from 10 to 40 wt%, preferably from 15 to 30 wt%, more preferably from 20 to 30 wt%, of a thermoplastic resin having a softening point comprised between 60°C and 140°C;
c) from 2 to 15 wt%, preferably from 2 to 8 wt%, more preferably from 2.5 to 4 wt%, of an epoxy curing agent;
d) optionally, a toughening agent; and
wherein the weight ratio of the epoxy compound and the thermoplastic resin is comprised between 0.8 and 4. Preferably, the weight ratio of the epoxy compound and the thermoplastic resin is comprised between 1 and 3, more preferably between 1.5 and 2.5, even more preferably between 1.8 and 2.2.

### EPOXY COMPOUND

The structural adhesive film according to the present invention, comprises a thermosettable composition that comprises an epoxy compound having an average epoxy equivalent weight of less than 250g/equivalent. Suitable epoxy compounds for use herein will be easily identified by those skilled in the art, in the light of the present description.

In a preferred aspect, the epoxy compound for use herein has an average epoxy equivalent weight of less than 230g/equivalent, preferably less than 220g/equivalent, more preferably less than 200g/equivalent. Preferably, the epoxy compound for use herein has an average epoxy equivalent weight comprised between 100 and 200g/equivalent, preferably between 150 and 200g/equivalent, more preferably between 170 and 200g/equivalent. Preferably still, the epoxy compound for use herein has a weight average molecular weight of not more than 700 g/mol, preferably not more than 500 g/mol, more preferably not more than 400 g/mol. Advantageously, the epoxy compound for use herein has a weight average molecular weight comprised between 200 and 400 g/mol, preferably between 300 and 400 g/mol, more preferably between 350 and 400 g/mol. The epoxy compound for use herein is preferably selected from the group of epoxy compounds having an average epoxy functionality, i.e. an average number of polymerizable epoxy groups per molecule, of at least 2 and, more preferably, from 2 to 4.

Any organic compound having at least one oxirane ring polymerizable by a ring opening reaction may be used as an epoxy compound in the thermosettable composition of the structural adhesive film according to the invention, provided they have an average epoxy equivalent weight of less than 250g/equivalent. Such materials, broadly called epoxies, include monomeric epoxy compounds and polymeric epoxy compounds and can be aliphatic, cycloaliphatic, aromatic or heterocyclic. Useful materials generally have at least two polymerizable epoxy groups per molecule and, more preferably, from two to four polymerizable epoxy groups per molecule.

These epoxy compounds are generally liquid, or semi-liquid, at room temperature and are frequently also referred to as reactive epoxy thinners or reactive epoxy diluents. These compounds are preferably selected from the group of optionally substituted di- and polyglycidyl ethers of di- and polyphenols or aliphatic or cycloaliphatic hydroxyl compounds. Suitable epoxy compounds for use herein are commercially available from Momentive under tradename EpikoteTM 828; from Dow Chemical Co. under tradename DER 331, DER 332 and DER 334; from Resolution Performance Products under tradename Epon® 828; from Polysciences, Inc. under tradename Epon® 825 / 826/ 830/ 834/ 863/ 824; from Hexion under tradename Bakelite® EPR 164; from Huntsman under tradename Araldite® GY 250/260; or from Leuna Harze under tradename EPILOX® A 1900. Epoxy compounds which are useful in the structural adhesive film are preferably derived from bisphenol A, bisphenol E, bisphenol F, bisphenol S, aliphatic and aromatic amines, such as methylene dianiline and aminophenols, and halogen substituted bisphenol resins, novolacs, aliphatic epoxies, and combinations thereof and/or therebetween. More preferably, the organic epoxies are selected from the group comprising diglycidyl ethers of bisphenol A and bisphenol F and epoxy novolacs.

The amount of epoxy compound in the thermosettable composition of the structural adhesive film is typically comprised between 30 and 60 wt%, preferably between 40 and 60 wt%, more preferably between 50 and 60 wt%, based on total weight of the thermosettable composition.

### THERMOPLASTIC RESIN

The thermosettable composition of the structural adhesive film according to the invention further comprises a thermoplastic resin having a softening point comprised between 60°C and 140°C. Suitable thermoplastic resins for use herein will be easily identified by those skilled in the art, in the light of the present description. Thermoplastic resins may also frequently be referred to as film forming agents.

In a preferred aspect, thermoplastic resins for use herein have a softening point comprised between 70°C and 120°C, preferably between 80°C and 100°C, more preferably between 85°C and 95°C.

Suitable thermoplastic resins for use herein are preferably selected from the group consisting of polyether thermoplastic resins, polypropylene thermoplastic resins, polyvinyl chloride thermoplastic resins, polyester thermoplastic resins, polycaprolactone thermoplastic resins, polystyrene thermoplastic resins, polycarbonate thermoplastic resins, polyamide thermoplastic resins, and any combinations of mixtures thereof.

Suitable thermoplastic resins for use herein may be advantageously selected from the group of polyether thermoplastic resins, and preferably polyhydroxyether thermoplastic resins. In a preferred aspect, thermoplastic resins for use herein are selected from the group of polyhydroxyether thermoplastic resins, which are preferably selected from the group consisting of phenoxy resins, polyether diamine resins, polyvinylacetal resins, in particular polyvinyl butyral resins, and any combinations or mixtures thereof. Examples of suitable polyvinylacetal resins for use herein include Vinyl Chloride/Vinyl Acetate Copolymers, Carboxyl-Modified Vinyl Copolymers, and Hydroxyl-Modified Vinyl Copolymers, commercially available from Dow Chemicals. In a very preferred aspect of the invention, the thermoplastic resin for use herein is selected from the group of phenoxy resins. Suitable thermoplastic resins for use herein are commercially available from InChem Corporation under trade designation PKHP, PKHH, PKHA, PKHB, PKHC, PKFE, PKHJ, PKHM-30 or PKHM-301.

The amount of thermoplastic resin in the thermosettable composition of the structural adhesive film is typically comprised between 10 and 50 wt%, preferably between 15 and 30 wt%, more preferably between 20 and 30 wt%, based on total weight of the thermosettable composition.

### EPOXY CURING AGENT

The thermosettable composition of the structural adhesive film according to the invention, further comprises an epoxy curing agent. Any epoxy curing agent, commonly known in the art, may be used in the thermosettable composition of the structural adhesive film of the invention. Suitable epoxy curing agents for use herein are materials that react with the oxirane ring of the organic epoxide to cause substantial cross-linking of the epoxide. These materials contain at least one nucleophilic or electrophilic moiety (such as an active hydrogen atom) that causes the cross-linking reaction to occur. Epoxy curing agents are distinct from epoxide chain extension agents, which primarily become lodged between chains of the organic epoxide and cause little, if any cross-linking. Epoxy curing agents as used herein are also known in the art as epoxy hardeners, epoxide hardeners, catalysts, epoxy curatives, and curatives.

Sometimes, differentiation is made between epoxy curing agents and accelerators which are used to increase the rate of the epoxide curing reaction. Accelerators typically are multifunctional materials which can also be classified as epoxy curing agents. Therefore, in the present specification, no differentiation is made between curing agents and accelerators.

Epoxy curing agents for use herein include those which are conventionally used for curing epoxy resin compositions and forming crosslinked polymer networks. Suitable epoxy curing agents may also be referred to as latent curing agents, which are typically chosen so that they do not react with the epoxy resin until the appropriate processing conditions are applied. Such compounds also include aliphatic and aromatic tertiary amines such as dimethylaminopropylamine and pyridine, which may act as catalysts to generate substantial crosslinking. Further, boron complexes, in particular boron complexes with monoethanolamine, imidazoles such as 2-ethyl-methylimidazole, guanidines such as tetramethyl guanidine, dicyanodiamide (often referred to as DICY), substituted ureas such as toluene diisocyanate urea, and acid anhydrides such as the 4-methyltetrahydroxyphthalic acid anhydride, 3-methyltetrahydroxyphthalic acid anhydride and methylnorbornenephthalic acid anhydride, may be employed. Still other useful epoxy curing agents include polyamines, mercaptans and phenols. Other epoxy curing agents for use herein include encapsulated amines, Lewis acids salts, transition metal complexes and molecular sieves. Preferably, the epoxy curing agent is selected from the group consisting of amines, acid anhydrides, guanidines, dicyandiamide and mixtures thereof. More preferably, the epoxy curing agent contains dicyandiamide. Suitable epoxy curing agents for use herein are commercially available from Air Products under tradename Amicure® CG-1200.

The amount of epoxy curing agents in the thermosettable composition of the structural adhesive film is typically comprised between 2 and 15 wt%, preferably between 2 and 8 wt%, more preferably between 2.5 and 4 wt%, based on total weight of the thermosettable composition.

### TOUGHENING AGENT

In a particular aspect, the thermosettable composition of the structural adhesive film may further comprise one or more toughening agents. Any toughening agent, commonly known in the art, may be used in the thermosettable composition of the structural adhesive film of the invention. The toughening agents are preferably selected from a group comprising core-shell toughening agents, CTBNs (carboxyl and/or nitrile terminated butadiene/nitrile rubbers) and high molecular weight amine terminated polytetramethylene oxide.

Core-shell toughening agents which are especially preferred, usually comprise different materials in the inner core region and the outer shell region, respectively. Preferably, the core may be harder than the shell but this is not required. The shell may comprise harder material and/or the shell may be layered in its construction. Most preferably, the inner hard core component is comprised of a single and/or a plurality of organic polymers and inorganic oxides from the first, second and/or third transition series of the periodic table such as silica, alumina, zirconia, and/or naturally occurring minerals such as feldspars, silicates, aluminates, zirconates, and/or other hardened materials such as carbides, nitrides, silicides, aluminides, and/or some combination thereof and therebetween. The outer soft shell component may be comprised of rubbers such as diene, olefin rubbers, natural rubber, polyisoprene, copolymers thereof, ethylene propylene monomer rubber, diene-acrylonitrile copolymers, copolymers of vinyl aromatic monomers, styrenebutadiene copolymers known as SBR rubbers, and terpolymers of dienes with acrylonitrile or unsaturated esters and styrene or vinyl toluene. The soft shell preferably includes modifications with functionalities such as carboxyl, hydroxyl, epoxy, cyanates, isocyanates, amino, and thiol which can react with the epoxy components of the precursor. Core-shell toughening agents which are useful in the thermosettable composition are commercially available, for example, from Rohm and Hass under the trade designation ParaloidTM.

CTBN toughening agents react through their carboxyl and/or nitrile functional groups with the epoxide component of the precursor during curing thereby introducing their butadiene/nitrile rubber portion as a soft, shock-absorbing segment into the epoxy network forming a hard segment. CTBN toughening agents which are useful in the present invention are commercially available, for example, from Hanse Chemie AG, Hamburg, Germany, under the trade designation Albipox™.

A high molecular weight amine terminated polytetramethylene oxide useful in the thermosettable composition is commercially available, for example, from 3M Company, St. Paul/MN, USA, under the trade designation "3M EPX™ Rubber". The amount of the one or more toughening agents present in the thermosettable composition is typically comprised between from 10 to 40 wt%, preferably between 10 and 30 wt%, more preferably between 10 and 20 wt%, based on total weight of the thermosettable composition.

In a particular aspect of the structural adhesive film according to the present invention, the weight ratio of the toughening agent and the thermoplastic resin is advantageously comprised between 1 and 4, preferably between 1 and 3, more preferably between 1.5 and 2.5, even more preferably between 1.8 and 2.2.

### BLOWING AGENT

In a particular aspect, the thermosettable composition of the structural adhesive film may further comprise one or more blowing agents. Any blowing agent, commonly known in the art, may be used in the thermosettable composition of the structural adhesive film of the invention.

By including a blowing agent in the thermosettable composition of the structural adhesive film, the structural adhesive film becomes heat expandable and may be referred to as an expandable structural adhesive film. Accordingly, by heating, for example during the heating to cause thermosetting of the adhesive sheet, the structural adhesive film expands which helps sealing of any gap in the metal joint. As a result, corrosion resistance may be improved. The one or more blowing agents are preferably selected from the group of non-encapsulated and encapsulated blowing agents.

Non-encapsulated blowing agents, which are sometimes also referred to as chemical blowing agents, release a gaseous compound such as nitrogen, nitrogen oxide, hydrogen or carboxide dioxide during heating. Chemical blowing agents which are useful in the present invention include, for example, azobisisobutyronitriles, azodicarbonamides, carbazides, hydrazides, non-azo chemical blowing agents based on sodium borohydride or sodium bicarbonate/citric acid and dinitrosopentamethylenetetramine. The amount of the one or more chemical blowing agents is typically comprises between 0.2 and 2 wt%, preferably between 0.5 and 1.5 wt%, based on the total weight of the thermosettable composition.

Encapsulated blowing agents usually comprise liquified gases such as, for example, trichlorofluoromethane or hydrocarbons such as n-pentane, iso-pentane, neo-pentane, butane and/or iso-butane encapsulated in a polymeric thermoplastic shell. Upon heating the liquified gas expands and enlarges or blows up the thermoplastic shell like a "micro-balloon". Typically, the amount one or more encapsulated blowing agents may be advantageously comprised between from 0.5 to 10 wt%, preferably from 1 to 5 wt%, more preferably from 1 to 2 wt%, based on the total weight of the thermosettable composition. Encapsulated blowing agents, which are useful in the thermosettable composition, are commercially available, for example, from Pierce & Stevens Chemical Corp under the trade designation Micropearl™, from Matsumoto under the trade name Microsphere™ or from Akzo Nobel under the trade name Expancel™.

In a particular aspect, the amount of one or more blowing agents is selected such as to provide the structural adhesive film with a free expansion rate upon curing of not more than 50%, preferably not more than 40%, more preferably not more than 30%, when subjecting the structural adhesive film to a curing temperature above the activation (onset) temperature of the curing reaction, and when measured as described in the Test Methods section. More in particular, the amount of one or more blowing agents is selected such as to provide the structural adhesive film with a free expansion rate upon curing of between 10 and 40%, preferably between 10 and 30%, more preferably between 15 and 25%.

The thermosettable composition may optionally comprise further components, additives and/or agents. Other optional ingredients that may advantageously be incorporated into thermosettable composition include wetting agents, such as those selected from the group consisting of titanates, silanes, zirconates, zircoaluminates, phosphoric ester(s) and mixtures thereof. The wetting agent improves the mixability and processability of the composition and can also enhance the composition's handling characteristics. Useful wetting agents are disclosed in U.S. 5,019,605. An especially useful wetting agent is commercially available as Coatex DO-UP6L from Coatex, Gene, France.

Other optional ingredients which may be used include additives, agents or performance modifiers such as e.g. flame retardants, impact modifiers, heat stabilizers, colorants, processing aids, lubricants, and reinforcing agents.

In a particular aspect, the thermosettable composition may comprise one or more fillers which may be used to regulate rheological properties of the precursor and adjust its viscosity to improve and adjust its processability for specific applications. Preferred fillers for use herein are selected from the group consisting of filler particles, microspheres, expendable microspheres, preferably pentane filled expendable microspheres or gaseous cavities, glassbeads, glass microspheres, hydrophobic silica type fillers, hydrophilic silica type fillers, fibers, electrically and/or thermally conducting particles, nano particles, and any combinations thereof. Preferred fillers for use herein are selected from the group of inorganic fillers, including silica. One preferred filler for use herein is hydrophobic fumed silica, which is commercially available as AerosilTM from Degussa or CAB-O-SILTM from Cabot. Another preferred filler for use herein is expanded perlite, which is commercially available under the trade designation Eurocell® from Europerl, Germany. Typically, the amount of filler may be advantageously of not more than 10 wt%, based on the total weight of the thermosettable composition.

In another particular aspect, the thermosettable composition may comprise one or more incompressible particulate material, such as e.g. solid glass beads commercially available from Kominex Mineralmahlwerk, GmbH. In the context of the present invention, it has been found that when incompressible particulate material is comprised in the thermosettable composition of the structural adhesive film according to the invention, undesirable squeezing-out of the structural adhesive film before curing may be advantageously avoided during compression step, when the structural adhesive film is used for bonding metal parts.

In a preferred aspect of the structural adhesive film according to the invention, the weight ratio of the epoxy compound and the thermoplastic resin, and optionally the amount of the toughening agent are selected such as to provide the structural adhesive film with an elongation at break of at least 100%, preferably at least 200%, more preferably at least 500%, even more preferably at least 700%, still more preferably at least 900%, when measured according to tensile test DIN EN ISO 527. Advantageously, the structural adhesive film is provided with an elongation at break of not more than 3000%, preferably not more than 2500%, more preferably not more than 2000%, in particular not more than 1500%, when measured according to tensile test DIN EN ISO 527.

The structural adhesive film according to the invention may be readily prepared by a number of techniques. For example, the various components may be added under ambient conditions to a suitable internal mixing vessel, such as a Mogul mixer. The mixing temperature is not critical and the mixing of the first and second epoxy components and the optional toughening agent component is typically performed at a temperature of 80-85°C. When the epoxy curing agent component and the optional blowing agent component is added the temperature may preferably be decreased to not more than 70°C. Mixing is continued until the components form a homogeneous mixture, after which time the thermosettable composition is removed from the mixer.

Due to their excellent processability the thermosettable composition can be processed as a film by conventional application equipment such as extruders or hot-melt coaters. The thermosettable composition may be processed as a self-supporting film or may alternatively be coated/laminated onto a suitable liner, such as e.g. a siliconized liner. The structural adhesive film of the invention may be applied to various substrates such as, for example, metals (for example, Al, Al alloys, titanium or stainless steel) or other substrates comprising, for example, glass, boron, carbon, Kevlar fibers, epoxy, phenols, cyanate esters and polyester matrices.

The structural adhesive film according to the invention is typically a soft conformable film, and may or may not be tacky at room temperature. Prior to curing, the structural adhesive film is preferably deformable and drapable so that it can applied to curved surfaces and assume any two-dimensional shape. The thickness of the structural adhesive film material may vary widely. Useful thicknesses have been found to be in the range of about 0.05 mm (millimeters) to 25 mm. For typical joining of metal panels, thicknesses may range from 0.1 to 5 mm, for example from 0.1 to 3 mm, or from 0.3 to 1 mm.

The structural adhesive film may be packaged in the form of rolls of film material, rolls of tapes, i.e., lengths of material in narrow widths, or stacks of sheets cut to a desired dimension or shape for the end use. If the adhesive film is tacky, a release liner may be interleaved between adjacent sheets or wraps of a roll. In the context of the present invention, it has been surprisingly found that where the structural adhesive film is packaged in the form of rolls of film material, the corresponding roll of film material is particularly resistant to oozing (i.e. the diffusing of epoxy resin out if the roll of film) upon storage. Without wishing to be bound by theory, it is believed that the long polymeric chains comprised in the thermoplastic resin participate in retaining the epoxy resin into the structural adhesive film upon storage. In particular, the structural adhesive film of the invention remains oozing-resistant when packaged in the form of rolls of film material having a length of above 100, preferably above 200, more preferably above 300, even more preferably above 500, still more preferably above 700, yet more preferably above 800 meters, and having a width typically comprised between 5 and 40 mm, in particular between 10 and 30 mm, more in particular between 10 and 20 mm.

The structural adhesive film of the invention may include one or more layers. The adhesive film may also include a netting. A suitable netting includes an open cloth or fabric of a polymeric material. Generally, the netting will be soft and may be stretchable. A particular example includes a heat set, soft and stretchy open nylon knitted cloth. The netting may have a thickness of 1 to 15 g/m2, for example 5 to 12 g/m2. A useful material includes 3MTM Scotch-WeldTM 3336 available from 3M Co. The structural adhesive film may also include a open non-woven layer such as a scrim.

The structural adhesive may include glass beads acting as a particulate spacer to ensure a minimum distance between the two panels within the hem structure. The average grain size of the glass beads may for example be 90 µm.

According to the invention the geometry of the hem structure is adjusted to ensure that before activating the adhesive and during further processing of the panel assembly no liquid enters between facing surfaces of the panels and the adhesive. If liquid enters in the space between facing surfaces and the adhesive, and the panel gets for example heat treated afterwards, there is the risk that the liquid gets vaporized e.g. during a heating step and thereby causes damage to the adhesive, which may influence the quality and optical appearance of the adhesive and therewith of the panel assembly. Further processing of the panel assembly may be directed to further processing through typical automotive production processes for panel assemblies. This may include processes like decreasing, flushing, phosphatising and/or e-coating. The panel assembly may need to go through one or more of these processes before the structural adhesive is activated. A heating step may be a necessary step to activate the adhesive.

Within the manufacturing process of the inventive assembly, the two panels may first be adhered to each other or held against each other with the help of the structural adhesive. Afterwards the two panels may pass several processes like for example degreasing, flushing, phosphatising, e-coating etc.. And finally the panels may be heated. During the heating step the structural adhesive may be activated.

According to another aspect of the invention the geometry of the hem structure has an angel alpha between the flange portion of the outer panel which is adjacent its end and the flange portion of the inner panel is such that the end of the outer panel points into the direction of the flange portion of the inner panel. Pointing into the direction of the flange portion of the inner panel is one of several parameters that ensure that the opening of the space surrounded by the facing surfaces of the flange portions of the inner and outer panel is reduced, which reduces the chances of liquid entering this space.

The angle alpha may be between 0° and 10°. Experiments have shown, that an angle alpha in that specific range for an outer panel with a thickness between 0,4 and 1,2 mm preferably of 0,7 mm shows good results regarding the requested quality and optical appearance of the adhesive after being activated.

The panel assembly may have a springback s between 0,05 and 0,1 mm for an outer metal panel with a thickness between 0,4 and 1,2 mm preferably of 0,7 mm, wherein the springback s is the difference between a preset thickness of the hem structure and the actual thickness of the hem structure. The preset thickness of the hem structure may be the sum of twice the thickness of the outer panels plus the thickness of the inner panel and plus twice the thickness of the tape, whereby the thickness of the tape usually gets reduced during the hemming process. The preset thickness of the hem structure is the thickness that the hemming tools apply to the hem structure. Due to the geometrical shape of the hem structure as well as depending on the material of the panels the hem structure may tend to open after the hemming process. This opening is called the springback effect and the springback s is defined as described above.

The panel assembly may have a hem radius R between 1 and 1,5 mm for an outer metal panel with a thickness between 0,4 and 1,2 mm preferably of 0,7 mm and an inner panel with a thickness between 0,4 and 1,2 mm preferably of 0,7 mm, wherein the hem radius is the radius of the inner surface of the outer panel in the bend over the flange portion of the inner panel. Experiments have shown that a hem radius R in this range have shown good results regarding the requested quality and optical appearance of the adhesive after being activated.

The panel assembly may provide panels for a door of a vehicle. The panel assembly may also provide any other kind of panels the need to be bonded to each other by bending a flange of one panel over a flange of the other panel. The panels may be panels for a vehicle, for example roof panels and support panels as well as all kind of panels for car closures, car wings and panels for the white industry like refrigerator, dishwasher and air condition systems.

The panels according to the invention may be steel panels. It is also possible that only the outer panel is a steel panel. Furthermore it is possible that the inner panel is a steel panel and the outer panel is any other kind of panel suitable to be bended over a flange of the first panel. The panels may be other metal panels, such as aluminum panels or magnesium panels. The panels may also be unpainted panels, i.e. they may be body in white parts as they are known or called in the automotive industry. Also reinforced glass fiber panels may be used.

The structural adhesive according to the invention may be a film or a sheet. Using a film or a sheet is beneficial because it provides the possibility of applying the adhesive either manually or automatically easily and reliably. In addition the film or sheet may be applied in a very clean and constant manner. This is especially beneficial in an automotive application.

The adhesive according to the invention may be a thermosetable composition as mentioned above. The adhesive may also comprise a blowing agent as also mentioned above.

The invention also relates to a method for making a panel assembly, the method comprising the following steps:
- providing an inner panel with a flange portion and an outer panel with a flange portion, wherein at least the outer panel is a metal panel;
- providing a structural adhesive;
- adhering said first and second metal part together such that the adhesive is provided between said inner and said outer panel thereby forming a panel joint, and
- bending the flange portion of the outer panel around the flange portion of the inner panel such that the hem geometry of the hem structure is adjusted to ensure that during further processing of the panel assembly through typical automotive processes no liquid enters between facing surfaces of the panels and the adhesive, and
- heating the panel assembly at a temperature above an activation temperature of the adhesive.

According to one aspect of the invention the method for making a panel assembly comprises degreasing, flushing, phosphatising and/or e-coating steps between bending and heating.

The structural adhesive may be applied to the outer panel before adhering the two panels together. The structural adhesive may also be applied to the inner panel before adhering the two panels together. When applying it to the inner panel, it may be folded around its flange portion before adhering the two panels together. When applying the adhesive to the outer panel, it may be bend together with the outer panel around the inner panel.

According to another aspect of the invention the method for making a panel assembly, comprises a bending step that is done in two steps. The first step is a pre-hemming step, in which the outer panel gets bend from around 0° to an angle between 90° and 145°. The second step is a final hemming step, where the outer panel gets bend from the position after pre-hemming to an angle between 145° to 190°.

According to yet another aspect of the invention the method for making a panel assembly, provides a panel assembly with a distance e in the longitudinal direction of the first flange between the end of the inner panel and the outer panel after a pre-hemming step which is less than 0,7 mm.

The invention will now be described in more detail with reference to the following Figures exemplifying particular embodiments of the invention:
- Fig. 1: is an embodiment showing a cross-sectional view of an inner panel with an adhesive sheet applied thereto and an outer panel 10 before joining it with the inner panel;
- Fig. 2: is a cross-sectional view of a metal panel assembly in accordance with the present invention after joining the outer part to and bending it around the inner part;
- Fig. 3: is a cross-sectional view of a metal panel assembly in accordance with the present invention after joining the outer part to and bending it around the inner part; and
- Fig. 4: is a cross-sectional view of a metal panel assembly in accordance with the present invention during the process of making the assembly.

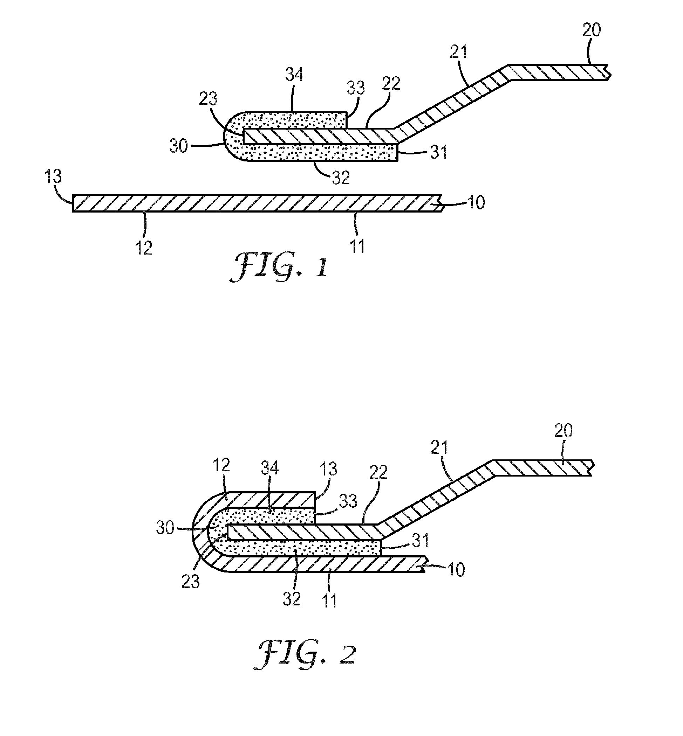

Figure 1 shows an embodiment in connection with the present invention with an inner panel 20, an outer panel 10 and a structural adhesive film 30. As shown in Figure 1, the outer panel 10 comprises a body portion 11 with a flange portion 12 along a margin of the body portion near end 13. The inner panel 20 also comprises a flange portion 22 along a margin of a body portion 21 of the inner panel near end 23.

During the process of making the assembly, which is a hemming process, the flange portion 12 of the outer panel 10 will be folded over flange portion 22 of the inner panel 20. The flange portion 22 of the inner panel 20 and the flange portion 12 of the outer panel 10 are arranged parallel to each other. End 23 of the inner panel 20 is adjacent flange 12 of the outer panel 10. A structural adhesive film 30 is located between the inner 20 and the outer panel 10. A portion 32 near end 31 of the structural adhesive film 30 is located between body portion 11 of the outer panel 10 and the flange 22 of the inner panel 20.

In accordance with one aspect of the invention, a panel assembly in accordance with the present invention may be obtained by adhering the structural adhesive film 30 to the inner panel 20, e.g. folding it over the flange portion 22 of the inner panel 20. However, it is also possible to instead adhere the structural adhesive film 30 to the outer panel prior to joining the metal panels (not illustrated). As shown in Figure 1, the structural adhesive film 30 is adhered to the inner panel 20 at opposite sides of the flange 22 of the inner panel and adhesive sheet is folded around the end 23 of the inner panel 20 such that portion 34 near end 33 of the structural adhesive film 30 is arranged over the flange portion 22 of the inner panel 20 and portion 32 near end portion 31 of the structural adhesive film is arranged below the flange portion 22 of the inner panel 20. In one particular aspect, the structural adhesive film 30 has a surface that is tacky at ambient temperature, typically about 20°C, and can be adhered to the inner panel via this tacky surface. Typically, the structural adhesive film 30 allows forming an adhesive bond sufficient to hold the metal parts together in the metal joint for further processing of the metal joint, e.g. for degreasing operations, flushing, phosphatising, and/or e-coating.

The outer panel 10 may then be folded such that the flange 12 of the outer panel is folded over the flange 22 of the inner panel 20 and over portion 34 of the structural adhesive film 30. Accordingly, outer panel 10 will be folded over inner panel 20 with the structural adhesive film located between the two panels and this a metal joint is obtained. In case the structural adhesive film 30 was adhered to the outer panel 10 instead of the inner panel 20, the structural adhesive film 30 will be folded in-between the panels during folding of the outer panel 10 over flange 22 of the inner panel 20.

The metal joint obtained is then heated to activate the adhesive, e.g. to cause thermosetting of the thermosettable composition of the structural adhesive film, thereby forming a permanent adhesive bond between the panels and sealing the joint for example due to expansion. This heating step can conveniently be performed whilst the panel assembly is being painted and baked as part of a usual vehicle manufacturing process. However, as desired, a separate heating or baking step of the metal joint may be provided as well. Typically, the temperature for heating the metal joint and to cause adhering and sealing is between 160°C and 200 °C. Heating may be carried out in one or more steps. For example two or more heating cycles at different temperatures in the aforementioned temperatures in the aforementioned range may be carried out. For example in a particular aspect, a first heating step may het the metal assembly to a temperature between 60 and 100°C and in a further heating step a higher temperature of between 160 and 200 °C may be used. The heating time may vary but is typically between 20 and 60 minutes, for example between 10 and 30 minutes. When several heating steps are used, the time for each of the heating steps may vary and may be within the aforementioned ranges. The heating step may be combined with other process steps of the manufacturing process of the parts to be made, e.g. with a heating step of the paint process.

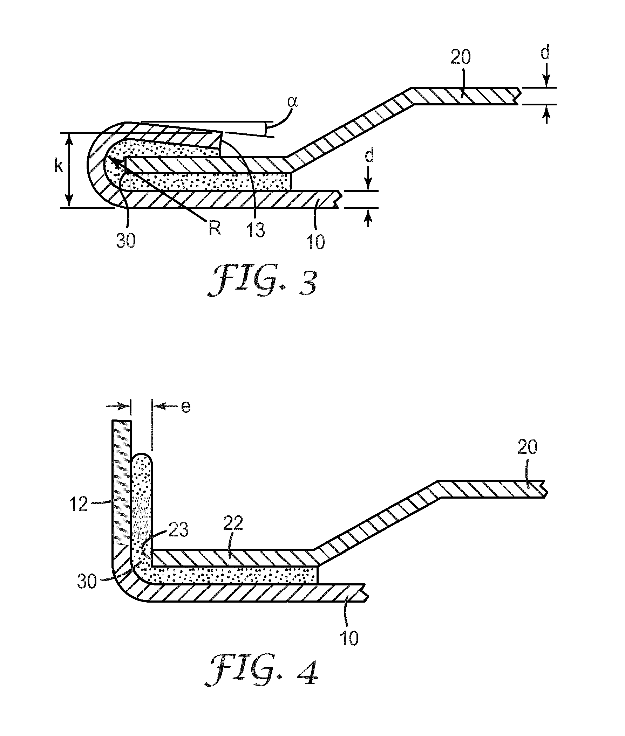

According to the invention the geometry of the hem structure is adjusted to ensure that before activating the structural adhesive and during further processing of the panel assembly through typical automotive processes no liquid enters between facing surfaces of the panels and the adhesive. A geometry that fulfils the above condition may provide at least one of the following parameters for an inner and outer panel made out of DX 56D+Z100 steel and a thickness of 0,7 mm):
- an angle alpha between the flange portion 12 of the outer panel 10 which is adjacent its end 13 and the flange portion 22 of the inner panel 30, which is between 0° and 10°, wherein the flange portion 12 of the outer panel 10 points into the direction of the flange portion 22 of the inner panel (Fig. 3);
- an inner hem radius of the inner surface of the outer panel 10 in the bend area over the flange portion 22 of the inner panel 20, which is between 1 and 1,5 mm;
- a springback being the difference between a preset thickness k at the end 13 of the outer panel 10 of the hem structure and the actual thickness of the hem structure; being between 0,05 and 0,1 mm; the preset thickness being the thickness that is preset from the hemming tools;
- a distance e, which is less than 0,7 mm, within the process of making the panel assembly according to the invention, in the longitudinal direction of the inner flange 22 between the end 23 of the inner panel 20 and the flange portion 12 of the outer panel 10 after a pre-hemming step (Fig. 4).

## Claims

1. A panel assembly comprising:
- an inner panel (20) and an outer panel (10), wherein at least the outer panel is a metal panel, the panel assembly is formed by bending a flange portion (12) of the outer panel over a flange portion (22) of the inner panel (hem structure), and
- a structural adhesive (30), which is between the flange portions of the inner and the outer panel and adheres the inner and the outer panel together;
**characterized in that**
the geometry of the hem structure is adjusted to ensure that before activating the adhesive and during further processing of the panel assembly no liquid may enter between facing surfaces of the panels and the adhesive.

2. The panel assembly according to claim 1, wherein the angel alpha between the flange portion (12) of the outer panel (10) which is adjacent its end (13) and the flange portion (22) of the inner panel (20) is such that the end of the outer panel points in the direction of the flange portion of the inner panel.

3. The panel assembly according to claim 1 or 2, wherein the angel alpha is between 0° and 10°.

4. The panel assembly according to claim 1 or 2, with a springback s which is between 0,05 and 0,1 mm for an outer metal panel (10) with a thickness between 0,4 and 1,2 mm preferably of 0,7 mm, wherein the springback is the difference between a preset thickness of the hem structure and the actual thickness of the hem structure.

5. The panel assembly according to any of the preceding claims, with a hem radius R between 1 and 1,5 mm for an outer metal panel (10) with a thickness between 0,4 and 1,2 mm preferably of 0,7 mm and an inner panel (20) with a thickness between 0,4 and 1,2 mm preferably of 0,7 mm, wherein the hem radius is the radius of a inner surface of the outer panel in the bend over the flange portion (23) of the inner panel.

6. The panel assembly according to any of the preceding claims, wherein the panels are door panels for a vehicle door.

7. The panel assembly according to any of the preceding claims, wherein at least the outer panel (10) or the inner (20) and the outer panel are steel panels.

8. The panel assembly according to claim 6, wherein the panels (10, 20) are unpainted panels (body in white parts).

9. The panel assembly according to any of the preceding claims, wherein the adhesive (30) is a film or sheet.

10. The panel assembly according to any of the preceding claims, wherein the adhesive (30) comprises a thermosettable composition.

11. The panel assembly according to any of the preceding claims, wherein the adhesive (30) comprises a blowing agent.

12. Method for making a panel assembly according to any of the claim 1 to 10, the method comprising:
- providing an inner panel with a flange portion and an outer panel with a flange portion, wherein at least the outer panel is a metal panel;
- providing a structural adhesive;
- adhering said first and second metal part together such that the adhesive is provided between said inner and said outer panel thereby forming a panel joint, and
- bending the flange portion of the outer panel around the flange portion of the inner panel such that the he geometry of the hem structure is adjusted to ensure that during further processing of the panel assembly no liquid enters between facing surfaces of the panels and the adhesive, and
- heating the panel assembly at a temperature above a activation temperature of the adhesive.

13. Method for making a panel assembly according to claim 11, wherein the panel assembly is going through degreasing, flushing, phosphatising and/or e-coating steps between bending and heating.

14. Method for making a panel assembly according to claim 11 or 12, wherein bending is done in two steps, a pre-hemming step and a final hemming step.

15. Method for making a panel assembly according to any of the proceeding claims, a distance e in the longitudinal direction of the first flange between the end of the inner panel and the outer panel after the pre-hemming step is less than 0,7 mm.
